# EUROPÄISCHE PATENTSCHRIFT

(11) **EP 2 002 875 B1**
(45) Veröffentlichungstag und Bekanntmachung des Hinweises auf die Patenterteilung: **02.06.2010**
(21) Anmeldenummer: 08157479.0
(22) Anmeldetag: 03.06.2008
(51) Int. Cl.: B01D 35/30, B01D 46/00

(54) **Filtereinrichtung, insbesondere Flüssigkeitsfilter**
Filter device, in particular fluid filter
Dispositif de filtre, en particulier filtre de liquide

(30) Priorität: 13.06.2007 DE 202007008473 U
(43) Veröffentlichungstag der Anmeldung: 17.12.2008
(73) Patentinhaber: MANN+HUMMEL GmbH, 71638 Ludwigsburg (DE)
(72) Erfinder: Thienel, Michael, 95359, Kasendorf (DE); Loos, Rainer, 71691, Freiberg (DE)

(56) Entgegenhaltungen:
- EP-A- 0 580 501
- DE-A1- 2 613 162
- DE-A1- 10 239 241
- US-A1- 2006 186 031

## Beschreibung

### Technisches Gebiet

Die Erfindung bezieht sich auf eine Filtereinrichtung, insbesondere einen Flüssigkeitsfilter, nach dem Oberbegriff des Anspruches 1.

### Stand der Technik

In der EP 1 236 492 B1 wird ein Flüssigkeitsfilter beschrieben, der ein topfförmiges Filtergehäuse mit darin aufzunehmendem Filterelement umfasst, wobei das Filtergehäuse von einem Gehäusedeckel zu verschließen ist. Hierfür ist zwischen Filtergehäuse und Filterdeckel ein Bajonettverschluss vorgesehen, bestehend aus jeweils zwei radial überstehenden Formschlusselementen auf der Innenseite des Filtergehäuses im stirnseitigen offenen Bereich und auf der Außenseite des Deckels, der stirnseitig in die offene Seite des Filtergehäuses axial eingeführt und anschließend verdreht wird, bis die Formschlusselemente in Achsrichtung eine formschlüssige Verriegelungsstellung zueinander einnehmen. Bei derartigen Bajonettverschlüssen ist auf eine korrekte Relativwinkellage zwischen dem Filtergehäuse und dem Deckel zu achten, um in der Verriegelungsstellung einen sicheren Verschluss zu gewährleisten. Um die axiale und Verdrehstellbewegung zur Durchführung der Bajonettverbindung zu erleichtern, können Anschläge vorgesehen sein, die insbesondere die Verdrehbewegung in Umfangsrichtung begrenzen, wodurch verhindert wird, dass versehentlich über die Überdeckungsstellung der Formschlusselemente hinaus verdreht und dadurch wieder eine Öffnungsposition erlangt wird.

Aus der US 2006/0186031 A1 ist ein Fluidfilter bekannt, welcher schlüsselartige Komponenten beinhaltet, um eine korrekte Montage sicher zu stellen und um automatisch ein Ventil zu betätigen.

Aus der EP 0 580 501 A1 ist ein Behälter für eine Filterpatrone bekannt, welcher aus einem zylindrischen Topf und einem abnehmbaren Deckel besteht, wobei der Boden des zylindrischen Topfes aufschraubbar ist und der Rand des Topfes mit wenigsten einer axialen Ausnehmung versehen und durch eine unterbrochene Randleiste, welche aus mehreren Abschnitten besteht, verlängert ist.

### Offenbarung der Erfindung

Von diesem Stand der Technik ausgehend liegt der Erfindung die Aufgabe zugrunde, mit einfachen konstruktiven Maßnahmen eine Filtereinrichtung dahingehend weiterzubilden, dass das Filtergehäuse der Filtereinrichtung mit geringem Aufwand und hoher Betriebssicherheit an ein weiteres Bauteil angeschlossen werden kann.

Diese Aufgabe wird erfindungsgemäß mit den Merkmalen des Anspruches 1 gelöst. Die Unteransprüche geben zweckmäßige Weiterbildungen an.

Bei der erfindungsgemäßen Filtereinrichtung handelt es sich insbesondere um einen Flüssigkeitsfilter, der bevorzugt für Brennkraftmaschinen eingesetzt wird, beispielsweise als Ölfilter oder als Kraftstofffilter, wobei im Rahmen der Erfindung auch eine Anwendung auf andere zu reinigende fluide Stoffe in Betracht kommt, insbesondere eine Reinigung von gasförmigen Medien wie z.B. in Luftfiltern. Die Filtereinrichtung weist ein topfförmiges Filtergehäuse auf, in dem das Filterelement aufgenommen ist. Das Filtergehäuse ist über eine Bajonettverbindung mit einem weiteren Bauteil zu verbinden, bei dem es sich beispielsweise um den Deckel des Filtergehäuses handeln kann oder um einen Verbindungsflansch, über den die Filtereinrichtung am vorgesehenen Einbauort montiert werden kann.

Der Bajonettverschluss umfasst mindestens ein erstes Formschlusselement an dem Filtergehäuse und mindestens ein zweites Formschlusselement an dem weiteren Bauteil, an dem das Filtergehäuse anzuordnen ist bzw. das an dem Filtergehäuse anzuordnen ist. Der Bajonettverschluss wird durch axiales Verschieben und anschließendes Verdrehen um die Gehäuselängsachse des Filtergehäuses erreicht, indem die Formschlusselemente zunächst axial aneinander vorbei geschoben werden und anschließend durch Verdrehen um die Gehäuselängsachse in die gewünschte axiale formschlüssige Verriegelungsstellung gebracht werden.

Erfindungsgemäß ist vorgesehen, dass die ersten und zweiten Formschlusselemente zusätzlich zu dem axialen Formschluss in Umfangsrichtung ebenfalls in eine formschlüssige Verriegelungsstellung zu verbringen sind. Hierfür ist in ein Formschlusselement eine Sperrstufe mit einem sich in Achsrichtung erstreckenden Vorsprung eingebracht, an dem in der Verriegelungsstellung das zweite Formschlusselement anliegt. Aufgrund der Erstreckung des Vorsprunges in Achsrichtung ist eine weitere Relativverdrehung zwischen dem Filtergehäuse und dem weiteren Bauteil ausgeschlossen, da der Vorsprung in Umfangsrichtung gesehen für das andere Formschlusselement einen Anschlag bildet. Man erhält auf diese Weise einen Formschluss in Achsrichtung sowie einen Formschluss in Umfangsrichtung, so dass die an der Bajonettverbindung teilnehmenden Bauteile in gewünschter Weise sicher verriegelt sind. Da die Sperrstufe in eines der Formschlusselemente eingebracht ist, wird die zusätzliche Verriegelung mit dem geringst möglichen, zusätzlichen konstruktiven Aufwand erreicht.

Weiter erfindungsgemäß weist das Formschlusselement zwei Sperrstufen auf, die zwischen sich eine im Umfangsrichtung verlaufende und axial zurückgesetzte Aussparung begrenzen, welche zur Aufnahme des korrespondierenden Formschlusselementes vorgesehen ist. Jede Sperrstufe bildet hierbei in Umfangsrichtung gesehen einen Anschlag für das gegenüberliegende Formschlusselement, wodurch in der Verriegelungsstellung in beide Umfangsrichtungen ein Formschluss erreicht wird. Zum Einführen des Formschlusselementes in die Aussparung zwischen den beiden Sperrstufen muss das Formschlusselement zunächst in eine axial über der Aussparung liegende Position gebracht werden, in der das Formschlusselement aber noch mit Abstand zu der Aussparung angeordnet ist. Anschließend wird das Formschlusselement durch axiales Verschieben in die Aussparung eingesetzt und befindet sich damit in der Verriegelungsposition. Zum Aufheben der Verriegelungsstellung wird der Vorgang entsprechend in umgekehrter Richtung ausgeführt.

Des Weiteren ist es erfindungsgemäß, an dem Filtergehäuse und dem weiteren Bauteil, welches mit dem Filtergehäuse verriegelt wird, jeweils ein Rastmittel vorzusehen, wobei die Rastmittel in der Verriegelungsstellung in einer Rastposition stehen und sich in der Entriegelungsstellung in Außerrastposition befinden. Die Rastmittel dienen dazu, die Überführung des Bauteile in die Rastposition bzw. Verriegelungsstellung anzuzeigen. Somit ist es möglich, die Verriegelungsstellung anhand der Rastmittel festzustellen.

Ferner ist erfindungsgemäß eines der Rastmittel an einem der Formschlusselemente angeordnet. Bei diesem Formschlusselement handelt es sich insbesondere um eines an dem weiteren Bauteil, welches mit dem Filtergehäuse zu verbinden ist. Beispielsweise kann an diesem Formschlusselement die Rastausnehmung eingebracht sein, in die die Rastfeder einrastet, welche am Federgehäuse angeordnet ist.

Gemäß einer bevorzugten Weiterbildung umfassen die Rastmittel eine Rastfeder an einem Bauteil und eine Rastausnehmung am zweiten Bauteil, wobei in der Rastposition die Rastfeder in die Rastausnehmung eingreift. Hierdurch kann ein akustisches und/oder ein haptisches Signal erzeugt werden, welches die Verriegelungsposition anzeigt. Mit dem Einschnappen der Rastfeder in die zugeordnete Rastausnehmung ist ein Rast- bzw. Klickgeräusch verbunden, welches vom Monteur akustisch wahrgenommen werden kann. Außerdem kann der mit dem Einrasten verbundene geringfügige Schlag der Rastfeder vom Monteur gespürt werden. Schließlich ist es auch möglich, über die Rastmittel eine optische Anzeige zu realisieren, die bei der Montage visuell wahrgenommen werden kann. Die Rastfeder kann aus Metall oder auch aus Kunststoff hergestellt werden.

Da die Verbindungskräfte vornehmlich über die Formschlusselemente aufgenommen werden und nicht über die Rastmittel, genügt eine konstruktiv einfach aufgebaute Ausführung der Rastmittel. Da die Rastmittel nur geringe Kräfte übertragen müssen, können diese auch mit geringer Stabilität ausgeführt werden. Gleichwohl kann es zweckmäßig sein, in Achsrichtung und/oder in Umfangsrichtung auch über die Rastmittel eine die Bauteile in der Verriegelungsposition sichernde Kraft übertragen zu lassen.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig.1 einen Schnitt durch eine Filtereinrichtung für eine Brennkraftmaschine,

Fig. 2 eine perspektivische Ansicht eines Verbindungs- bzw. Fahrzeugsflansches, welcher über einen Bajonettverschluss mit dem Filtergehäuse der Filtereinrichtung zu verbinden ist,

Fig. 3 in perspektivischer Ansicht einen Ausschnitt aus dem stirnseitigen Bereich des Filtergehäuses mit einem Formschlusselement, über das der Bajonettverschluss herzustellen ist,

Fig. 4 in perspektivischer Ansicht und teilweise frei geschnitten die Verbindung zwischen dem Filtergehäuse und dem Fahrzeugflansch.

In den Figuren sind gleiche Bauteile mit gleichen Bezugszeichen versehen.

### Ausführungsformen der Erfindung

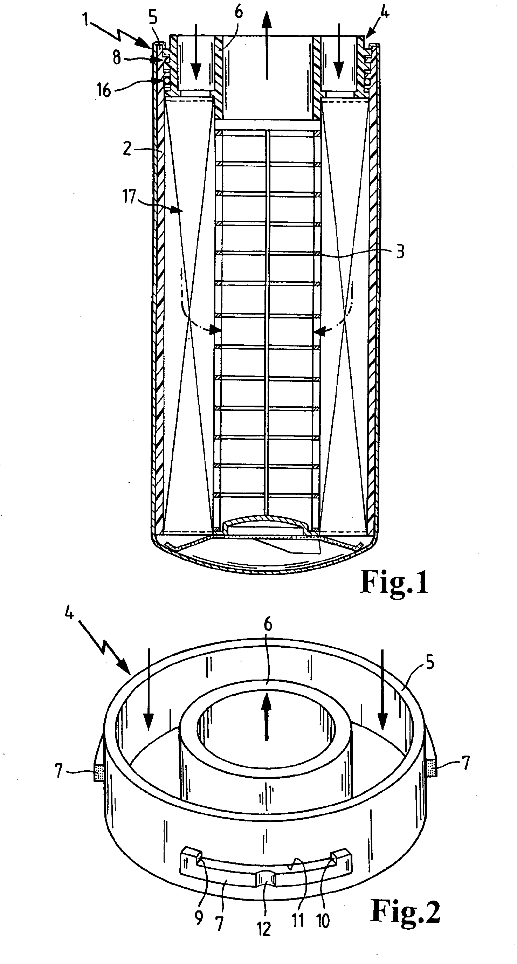

Bei der in Fig. 1 dargestellten Filtereinrichtung 1 handelt es sich insbesondere um einen Flüssigkeitsfilter, der zum Einsatz für eine Brennkraftmaschine in einem Fahrzeug vorgesehen ist, beispielsweise um einen Ölfilter oder einen Kraftstofffilter. Die Filtereinrichtung 1 umfasst ein topfförmiges Filtergehäuse 2, in welchem das Filterelement 17 aufgenommen ist, das von dem zu reinigenden Fluid durchströmt wird. Im Filtergehäuse 2 ist außerdem ein Stützgerüst 3 angeordnet, welches Träger des Filterelementes 17 ist. An der offenen Stirnseite des Filtergehäuses 2 ist ein Fahrzeugflansch 4 aufgenommen, über den die Anbindung der gesamten Filtereinrichtung 1 an ein weiteres Bauteil des Fahrzeugs bzw. der Brennkraftmaschine erfolgt. Über die offene Stirnseite erfolgt, wie mit den Pfeilen dargestellt, die Zufuhr des ungereinigten Fluids und die Ableitung des gereinigten Fluids. Der Fahrzeugflansch 4 ist hierzu, wie insbesondere auch Fig. 2 zu entnehmen, zweiteilig aufgebaut und umfasst einen äußeren Ring 5 und einen inneren Ring 6, wobei der Ringraum zwischen äußerem Ring und innerem Ring sowie der vom inneren Ring eingeschlossene, zylindrische Raum für die Zufuhr bzw. Ableitung des Fluids dient. Im Ausführungsbeispiel dient der Ringraum zwischen den Ringen 5 und 6 für die Zufuhr und der innere, im inneren Ring 6 gelegene Raum für die Ableitung des gereinigten Mediums für die Filtereinrichtung. Im Inneren des Gehäuses wird das eingeleitete, ungereinigte Fluid radial nach innen durch die Wandung des Filterelements 17 geleitet und danach axial abgeleitet.

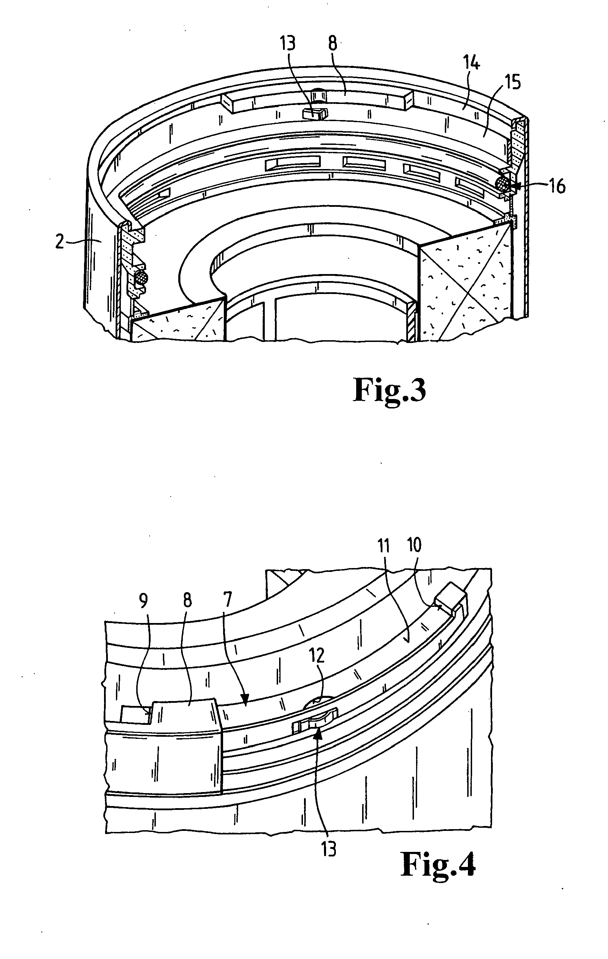

Der Flansch 4 ist lösbar mit dem Filtergehäuse 2 verbunden. Hierfür ist ein Bajonettverschluss vorgesehen, der Formschlusselemente 7 auf der Außenseite des äußeren Ringes 5 des Flansches 4 umfasst sowie korrespondierende Formschlusselemente 8 an der Innenseite des Filtergehäuses 2 im Bereich der offenen Stirnseite. In der Schließposition gemäß der Figuren 1 und 4 greifen die Formschlusselemente 7 und 8 formschlüssig ineinander und bieten sowohl in Achsrichtung als auch in Umfangsrichtung jeweils eine feste Verbindung. Die Formschlusselemente 7 an dem Flansch 4 erstrecken sich radial nach außen, die Formschlusselemente 8 an der Innenseite des Filtergehäuses 2 erstrecken sich radial nach innen. Über den Umfang verteilt sind mehrere Formschlusselemente 7, 8 angeordnet, zwischen denen in Umfangsrichtung gesehen jedoch jeweils ein ausreichend großer Abstand liegt, um beim Montieren die Formschlusselemente axial aneinander vorbei schieben zu können, bevor nach Art des Bajonettverschlusses eine Verdrehung um die Längsachse der Filtereinrichtung bis zum Erreichen der endgültigen Verriegelungsposition durchgeführt wird.

Wie Fig. 2 zu entnehmen, weist mindestens ein Formschlusselement 7 an dem Flansch 4, das sich in Umfangsrichtung erstreckt, im Bereich der Stirnseiten jeweils eine Sperrstufe 9 bzw. 10 auf, zwischen denen eine axial zurückgesetzte Aussparung 11 gebildet ist. Die Sperrstufen 9 und 10 bilden jeweils einen Anschlag in Umfangsrichtung. Der Abstand zwischen den Sperrstufen 9 und 10 bzw. die Erstreckung der Aussparung 11 in Umfangsrichtung ist an die Erstreckung der zugeordneten Formschlusselemente 8 am Filtergehäuse 2 angepasst, so dass in der Verriegelungsposition ein Formschlusselement 8 am Filtergehäuse 2 in die Aussparung 11 am Formschlusselement 7 eingreift, welches an dem Flansch 4 angeordnet ist. Die Sperrstufen 9 und 10 bilden hierbei jeweils einen Anschlag in Umfangsrichtung, um ein unbeabsichtigtes weiteres Verdrehen zwischen dem Filtergehäuse 2 und dem Flansch 4 zu verhindern.

Auf der radialen Außenseite des Formschlusselementes 7 an dem Flansch 4 ist etwa in der Mitte eine Rastausnehmung 12 eingebracht, die ein Rastmittel bildet und mit einem korrespondierenden, als Rastfeder ausgeführten weiteren Rastmittel am Federgehäuse 2 zusammenwirkt. Diese mit Bezugszeichen 13 gekennzeichnete Rastfeder ist in Fig. 3 und 4 dargestellt, die Rastfeder 13 befindet sich unmittelbar unterhalb des Formschlusselementes 8 auf der Innenseite des Filtergehäuses 2 benachbart zur offenen Stirnseite. Das Formschlusselement 8 und die Rastfeder 13 können sich an unterschiedlichen, axial unmittelbar übereinander liegenden Ringen 14 und 15 befindet, wobei ggf. auch eine Anordnung des Formschlusselementes 8 und der zugeordneten Rastfeder 13 an einem gemeinsamen Ring möglich ist, der auf der Innenseite des Filtergehäuses 2 positioniert ist. Des Weiteren ist es möglich, das Formschlusselement 8 und/oder die Rastfeder 13 einteilig mit dem Filtergehäuse 2 auszubilden. Es besteht auch die Möglichkeit, Rastfeder 13 und Rastausnehmung 12 hinsichtlich ihrer Anordnung zu tauschen, d. h. die Rastfeder 13 befindet sich dann auf dem Bauteil 4 und die Rastausnehmung 12 an dem Filtergehäuse 2.

Wie Fig. 3 weiters zu entnehmen, ist auf der Innenseite des Filtergehäuses 2 ein Dichtring 16 angeordnet, der im montieren Zustand auf der äußeren Mantelfläche des Flanschs 4 dichtend anliegt.

In Fig. 4 ist die Rastfeder 13 in der in die Rastausnehmung 12 eingerasteten Position dargestellt. Beim Einrasten kann ein akustisches und/oder haptisches Signal erzeugt werden, anhand dessen der Monteur erkennen kann, dass sich das Filtergehäuse 2 und der Flansch 4 im verrasteten und damit auch im verriegelten Zustand befinden.

## Patentansprüche

1. Filtereinrichtung, insbesondere Flüssigkeitsfilter, mit einem topfförmigen Filtergehäuse (2), in dem ein Filterelement aufgenommen ist, wobei das Filtergehäuse (2) über eine Bajonettverbindung mit einem weiteren Bauteil (4) verbindbar ist, wobei die Bajonettverbindung ein erstes Formschlusselement (8) an dem Filtergehäuse (2) und ein zweites Formschlusselement (7) an dem weiteren Bauteil (4) umfasst und die ersten und zweiten Formschlusselemente (7,8) durch axiales Verschieben und Verdrehen um die Gehäuselängsachse in eine axial formschlüssige Verriegelungsstellung zu verbringen sind, wobei die ersten und zweiten Formschlusselemente (7, 8) zusätzlich in Umfangsrichtung in eine formschlüssige Verriegelungsstellung zu verbringen sind, wofür in ein Formschlusselement (7) eine Sperrstufe (9) mit einem sich in Achsrichtung erstreckenden Vorsprung eingebracht ist, an dem in Verriegelungsstellung das zugeordnete Formschlusselement (8) anliegt, wobei in das die Sperrstufe (9) aufweisende Formschlusselement (7) eine zweite Sperrstufe (10) eingebracht ist, wobei die beiden Sperrstufen (9, 10) zwischen sich eine in Umfangsrichtung verlaufende, axial zurückgesetzte Aussparung (11) zur Aufnahme des korrespondierenden Formschlusselements (8) in der Verriegelungsstellung begrenzen, **dadurch gekennzeichnet, dass** an dem Filtergehäuse (2) und dem weiteren Bauteil (4) jeweils Rastmittel (12, 13) vorgesehen sind, die in der Verriegelungsstellung in einer Rastposition stehen und in Entriegelungsstellung sich in Außerrastposition befinden, wobei über die Rastmittel (12, 13) die Überführung in die Rastposition anzeigbar ist, wobei eines der Rastmittel (12, 13) an einem Formschlusselement (7, 8) angeordnet ist.

2. Filtereinrichtung nach Anspruch 1, **dadurch gekennzeichnet, dass** die Rastmittel eine Rastfeder (13) und eine Rastausnehmung (12) umfassen, wobei in der Rastposition die Rastfeder (13) in die Rastausnehmung (12) eingreift.

3. Filtereinrichtung nach Anspruch 2, **dadurch gekennzeichnet, dass** die Rastfeder (13) an dem Filtergehäuse (2) angeordnet ist.

4. Filtereinrichtung nach Anspruch 2, **dadurch gekennzeichnet, dass** die Rastausnehmung (12) an einem Formschlusselement (7) angeordnet ist.

5. Filtereinrichtung nach einem der Ansprüche 1 bis 4 für eine Brennkraftmaschine.

6. Filtereinrichtung nach Anspruch 4, **dadurch gekennzeichnet, dass** das weitere Bauteil ein Fahrzeugflansch (4) ist.

## Claims

1. Filtering device, in particular liquid filter, with a pot-shaped filter housing (2) in which a filter element is inserted, the filter housing (2) being connectable with another component (4) via a bayonet connection, the bayonet connection comprising a first positive-engaged element (8) at the filter housing (2) and a second positive-engaged element (7) at the other component (4), and the first and second positive-engaged elements (7, 8) are to be brought into an axially positive locking position by an axial shifting and rotation around the housing's longitudinal axis, the first and second positive-engaged elements (7, 8) are to be brought additionally into a positive locking position in circumferential direction; to realize this, a blocking stage (9) is integrated in a positive-engaged element (7) with a projection extending in axial direction which is in contact with the allocated positive-engaged element (8) in locking position, a second blocking stage (10) being integrated in the positive-engaged element (7) featuring the blocking stage (9), both blocking stages (9, 10) defining between them, in locking position, an axially recessed cut-out (11) extending in circumferential direction for accepting the corresponding positive-engaged element (8), **characterized in that** at the filter housing (2) and the other component (4) locking devices (12, 13) are provided which - in locking position - are in an engaged position and - in non-locking position - in a non-engaged position, the transition into the engaged position being indicated via the locking devices (12, 13), one of the locking devices (12, 13) being disposed at one positive-engaged element (7, 8).

2. Filtering device according to claim 1, **characterized in that** the locking devices comprise a stop spring (13) and a snap-on recess (12), the stop spring (13) engaging with the snap-on recess (12) in engaged position.

3. Filtering device according to claim 2, **characterized in that** the stop spring (13) is disposed at the filter housing (2).

4. Filtering device according to claim 2, **characterized in that** the snap-on recess (12) is disposed at a positive-engaged element (7).

5. Filtering device according to one of the claims 1 to 4 for an internal combustion engine.

6. Filtering device according to claim 4, **characterized in that** the other component is a motor vehicle flange (4).

## Revendications

1. Dispositif de filtration, en particulier filtre à liquide, avec un boîtier de filtre (2) en forme de coupelle dans lequel est logé un élément filtrant, le boîtier de filtre (2) pouvant être relié au moyen d'un raccord à baïonnette à un autre composant (4), le raccord à baïonnette comprenant un premier élément craboté (8) sur le boîtier de filtre (2) et un deuxième élément craboté (7) sur l'autre composant (4) et les premier et deuxième éléments crabotés (7, 8) pouvant être amenés dans une position de verrouillage par liaison de forme par déplacement axial et rotation autour de l'axe longitudinal du boîtier, les premier et deuxième éléments crabotés (7, 8) pouvant de surcroît être amenés en sens circonférentiel dans une position de verrouillage par liaison de forme, opération pour laquelle un étage d'arrêt (9), avec une saillie s'étendant en direction de l'axe et sur lequel, en position de verrouillage, l'élément craboté assigné (8) est en contact, est intégré à un élément craboté (7), un deuxième étage d'arrêt (10) étant intégré à l'élément craboté (7) doté de l'étage d'arrêt (9), les deux étages d'arrêt (9, 10) limitant entre eux, en position de verrouillage, un évidement (11) s'étendant en sens circonférentiel et en retrait en sens axial destiné à réceptionner l'élément craboté (8) correspondant, **caractérisé en ce que** des pièces d'enclenchement (12, 13) qui, en position de verrouillage, se trouvent dans en position d'enclenchement et, en position de déverrouillage, se trouvent en position de déclenchement sont prévues sur le boîtier du filtre (2) et l'autre composant (4), le passage en position d'enclenchement pouvant être identifié par les pièces d'enclenchement (12, 13), l'une des pièces d'enclenchement (12, 13) étant disposée sur un élément craboté (7, 8).

2. Dispositif de filtration selon la revendication 1, **caractérisé en ce que** les pièces d'enclenchement comprennent un ressort à cran d'arrêt (13) et une cavité d'enclenchement (12), le ressort à cran d'arrêt (13) s'enclenchant dans la cavité d'enclenchement (12) en position d'enclenchement.

3. Dispositif de filtration selon la revendication 2, **caractérisé en ce que** le ressort à cran d'arrêt (13) est disposé sur le boîtier de filtre (2).

4. Dispositif de filtration selon la revendication 2, **caractérisé en ce que** la cavité d'enclenchement (12) est disposée sur un élément craboté (7).

5. Dispositif de filtration selon l'une des revendications 1 à 4 pour un moteur à combustion interne.

6. Dispositif de filtration selon la revendication 4, **caractérisé en ce que** l'autre composant est une bride de véhicule (4).
